# FASCICULE DE BREVET EUROPEEN

(11) **EP 1 680 944 B1**
(45) Date de publication et mention de la délivrance du brevet: **29.09.2010**
(21) Numéro de dépôt: 03782524.7
(22) Date de dépôt: 06.11.2003
(51) Int. Cl.: H05B 3/34, B65D 81/20

(54) **SAC CHAUFFANT POUR PRODUITS DE BOULANGERIE**
HEIZTASCHE FÜR BACKWAREN
HEATING BAG FOR BAKERY PRODUCTS

(43) Date de publication de la demande: 19.07.2006
(73) Titulaire: Saadoun, Serge, 02200 Soissons (FR)
(72) Inventeur: Saadoun, Serge, 02200 Soissons (FR)
(74) Mandataire: Thévenet, Jean-Bruno
(86) Numéro de dépôt international: PCT/FR2003/003320
(87) Numéro de publication internationale: WO 2005/055664

(56) Documents cités:
- US-A- 4 816 646
- US-A- 4 916 290
- US-A- 6 018 143
- US-A1- 2002 038 800
- US-B1- 6 281 477

## Description

La présente invention a pour objet un sac chauffant pour produits de boulangerie fabriqués à l'aide d'une pâte à base de farine, le sac chauffant comprenant une enveloppe souple ou semi-rigide définissant un fond, des parois latérales, une ouverture et des moyens d'obturation sélective de l'ouverture.

On connaît déjà divers types d'emballages chauffants, notamment pour produits alimentaires, qui comportent une enceinte munie de moyens de chauffage électrique. Ces dispositifs sont cependant généralement réalisés sous forme de coffrets rigides d'un coût relativement élevé et d'un poids non négligeable même s'ils sont prévus pour être portables.

On connaît également, par exemple par le document GB 2127678A des sacs chauffants pour produits alimentaires, ces sacs comportant une enveloppe extérieure en matière plastique associée à une feuille en aluminium et à une garniture interne qui comporte des résistances électriques chauffantes placées en regard de la feuille en aluminium, les résistances électriques chauffantes étant alimentées à partir d'une alimentation basse tension disponible par exemple sur la prise allume-cigare d'un véhicule automobile. Un tel type de sac chauffant est inadapté au réchauffage d'aliments particuliers tels que les produits de boulangerie pour lesquels il est essentiel de contrôler de façon spécifique l'évaporation de l'eau afin d'éviter un effet de rassissement du pain ou de l'article de boulangerie considéré tel qu'une brioche par exemple.

La présente invention vise à remédier aux inconvénients précités et à permettre de réaliser un sac chauffant léger, peu coûteux, facilement transportable, et apte à assurer en toute sécurité le réchauffage rapide de produits de boulangerie, tels que du pain avec ou sans levure, comme par exemple du pain en baguette ou en flûte, du pain de seigle , du pain complet, du pain de son, des pains de mie, des pains connus sous les noms de pita, motsi, mezonot, 'halot, lavash, bretzels, matsot, des pains italiens, des tabouna ou encore panini, ou des viennoiseries, comme par exemple des pains au lait, des brioches ou des croissants, en conservant toute la qualité et l'intégrité de ces produits tout en améliorant leur saveur.

Ces buts sont atteints, conformément à l'invention, grâce à un sac chauffant pour produits de boulangerie fabriqués à l'aide d'une pâte à base de farine, le sac comprenant une enveloppe souple ou semi-rigide définissant un fond, des parois latérales, une ouverture et des moyens d'obturation sélective de l'ouverture,
**caractérisé en ce qu**'il comprend au moins une plaque chauffante semi-flexible dans laquelle est incorporée une résistance électrique et qui est elle-même insérée dans une housse en un matériau naturel comprenant le coton, le lin et la laine, cette housse constituant une partie du fond, des parois latérales ou des moyens d'obturation du sac, et en ce que pour chaque plaque chauffante la puissance de chauffage par cm² est comprise entre 0,13 W et 0,24 W.

La puissance de chauffage par cm² pour chaque plaque chauffante est de préférence comprise entre 0,16 W et 0,20 W et de façon encore plus préférentielle voisine de 0,18 W.

Avantageusement, le sac chauffant comprend des première et deuxième plaques chauffantes semi-flexibles dans chacune desquelles est incorporée une résistance électrique et qui sont elles-mêmes insérées dans des housses en un matériau naturel constituant une partie du fond, des parois latérales ou des moyens d'obturation du sac.

La tension d'alimentation de la résistance électrique de chaque plaque chauffante est comprise entre 100 V et 240 V.

Selon un premier mode de réalisation possible, les première et deuxième plaques chauffantes sont incorporées dans deux parties opposées des parois latérales.

Selon un autre mode de réalisation possible, les première et deuxième plaques sont incorporées d'une part dans le fond du sac et d'autre part dans les moyens d'obturation sélective de l'ouverture.

Selon un mode de réalisation avantageux, chaque plaque chauffante semi-flexible comprend une résistance électrique à fil intégré en nappe insérée dans des feuilles de tissu de verre siliconé.

Selon un aspect particulier de l'invention, chaque housse incorporant les première et deuxième plaques chauffantes semi-flexibles comprend d'une part une garniture de coton extérieure et une finette de coton disposée entre la garniture de coton extérieure et ladite plaque chauffante et d'autre part une doublure de coton intérieure disposée du côté intérieur par rapport à ladite plaque chauffante.

Pour un usage plus spécialement adapté à des pains de forme allongée tels que des baguettes, le sac chauffant peut comprendre une forme allongée et les moyens d'obturation sélective de l'ouverture sont constitués par un simple rabat souple ou par des moyens de fermeture disposés au voisinage du rebord de l'ouverture.

Pour un usage plus spécialement adapté à des pains ou des viennoiseries de petite taille ou en forme de boule, de galette ou de couronne, le sac chauffant peut présenter la forme d'une mallette et peut dans ce cas comprendre des parois semi-rigides renforcées par exemple par une couche de produit thermocollant à embrase.

Selon une caractéristique particulière, qui rend le sac chauffant plus universel, le sac chauffant comprend un commutateur pour assurer sélectivement le branchement des résistances électriques en série pour une alimentation à partir d'une source de tension d'alimentation à une première tension nominale V_{N1} ou en parallèle pour une alimentation à partir d'une source de tension d'alimentation à une seconde tension nominale V_{N2} égale à la moitié de la première tension nominale V_{N1}.

Le sac chauffant peut en outre comprendre un limiteur thermique intégré à chaque plaque chauffante.

Selon un mode particulier de réalisation, le sac chauffant comprend une paire de plaques chauffantes semi-flexibles disposées dans deux faces principales opposées du sac et les parois réunissant ces deux faces principales opposées présentent une capacité de déformation dans une direction perpendiculaire auxdites faces principales opposées.

Chaque plaque chauffante semi-flexible peut être amovible par rapport à la housse dans laquelle elle est insérée.

D'autres caractéristiques et avantages de l'invention ressortiront de la description suivante de modes particuliers de réalisation, donnés à titre d'exemples, en référence aux dessins annexés, sur lesquels :
- la figure 1 est une vue d'ensemble en perspective d'un premier exemple de sac chauffant selon l'invention, adapté à des pains allongés,
- la figure 2 est une section selon la ligne II-II de la figure 1 montrant la constitution d'une partie de la paroi latérale du sac incorporant une plaque électrique chauffante semi-rigide,
- la figure 3 est un schéma montrant le montage électrique des première et deuxième plaques électriques chauffantes destinées à être incorporées dans des housses d'un sac chauffant selon l'invention,
- la figure 4 est une vue d'ensemble en perspective, en position ouverte, d'un autre exemple de sac chauffant en forme de mallette adapté à des pains de petite taille ou en forme de boule, de galette ou de couronne,
- la figure 5 est une vue analogue à celle de la figure 4, mais montre le sac chauffant en position fermée,
- la figure 6 est une section selon la ligne VI-VI de la figure 4 montrant la constitution d'une partie de la paroi supérieure du sac incorporant une plaque électrique chauffante semi-rigide, et
- la figure 7 est une section selon la ligne VII-VII de la figure 4 montrant la constitution de la paroi latérale du sac chauffant en forme de mallette.

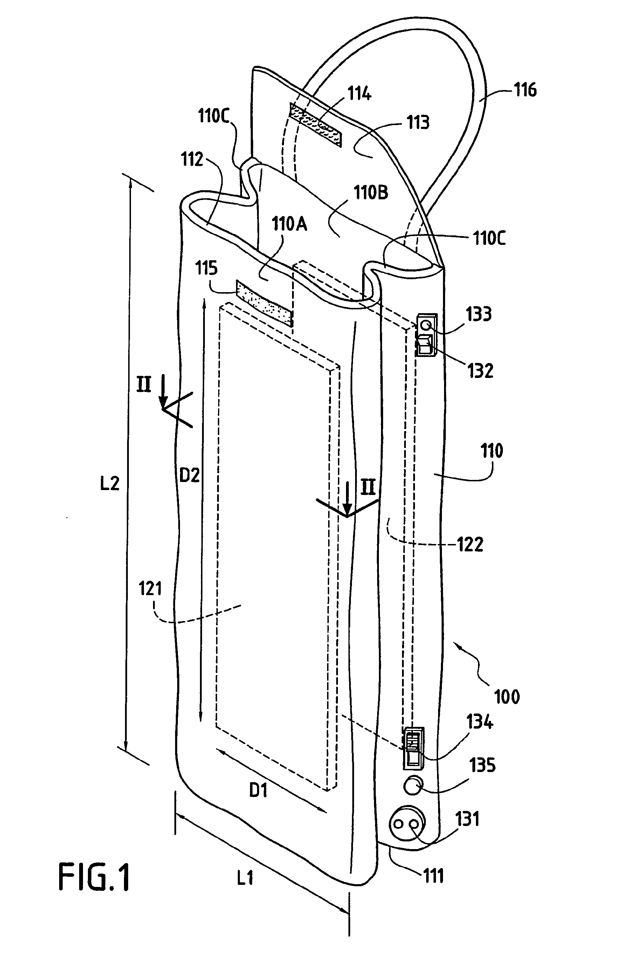

On décrira d'abord en référence aux figures 1 à 3, un premier exemple de sac chauffant adapté au réchauffage de pains allongés, tels que des baguettes ou des flûtes, mais qui peut aussi être utilisé pour d'autres produits de boulangerie de formes et de tailles diverses.

On notera que l'on entend par produits de boulangerie aussi bien des pains fabriqués à l'aide d'une pâte fermentée à base de farine de céréales que des pains azymes ou encore des viennoiseries.

A titre d'exemples de pains avec ou sans levure, on peut citer le pain complet, le pain de son, le pain de seigle, le pain de mie, le pain italien, les pains connus sous les noms de pitta, motsi, mezonot, 'halot, lavash, bretzels, matsot, tabouna ou encore panini.

Les viennoiseries peuvent comprendre par exemple des pains au lait, des brioches, des croissants ou des galettes.

L'invention s'applique aussi à des pains ou viennoiseries fourrés, tels que par exemple, des sandwichs, des falafels, des shawarmas, des pains aux raisins, des pains au chocolat, dès lors que les éléments ajoutés au pain sont placés à l'intérieur de celui-ci et supportent une température de l'ordre de 40 à 42°C.

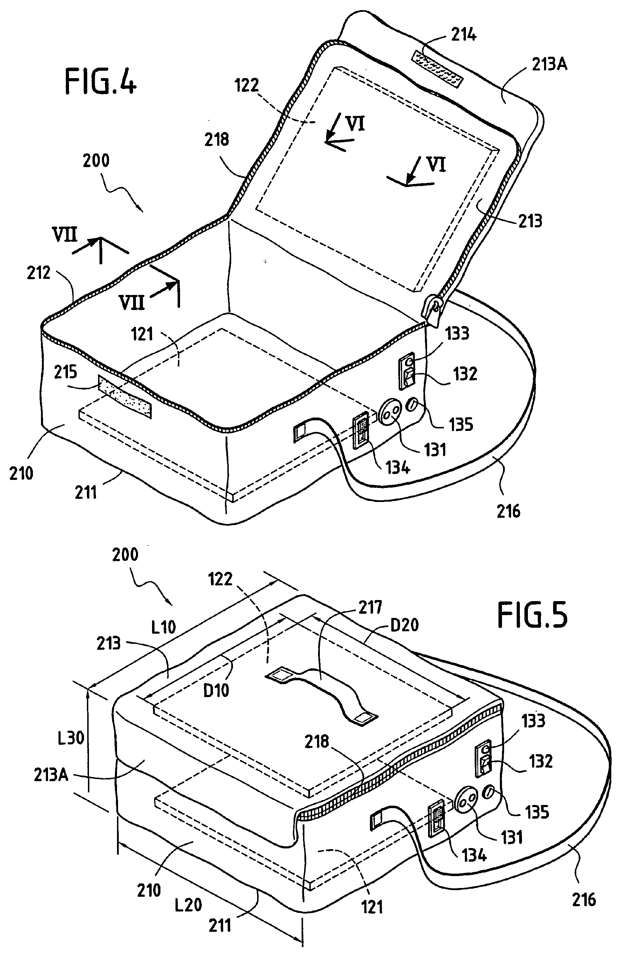

Des produits tels que des quiches, qui comprennent des aliments non complètement incorporés dans la pâte ne sont en revanche pas adaptés pour être placés dans un sac souple tel que celui illustré sur la figure 1, mais peuvent le cas échéant être disposés dans un sac en forme de mallette tel que celui qui sera décrit plus loin en référence aux figures 4 à 7.

Le sac à pain chauffant 100 illustré sur la figure 1 comprend un fond 111, des parois latérales 110 et une ouverture supérieure 112. Un rabat 113 peut venir obturer l'ouverture supérieure 112 d'introduction du pain. Le rabat 113 peut être maintenu en position fermée par un système de fermeture comprenant par exemple des rubans 114, 115 disposés sur le rabat et sur la partie supérieure du sac, ces rubans 114, 115 étant prévus pour s'accrocher l'un à l'autre par l'intermédiaire de fibres textiles. D'autres types de fermetures à boutons, boutons-pressions ou fermeture à glissière sont naturellement possibles. Ces moyens de fermeture peuvent le cas échéant être agencés directement au niveau du rebord de l'ouverture 112 et le rabat 113 peut dans ce cas être supprimé. Un cordon 116 fixé sur le sac 100 facilite son transport.

Le sac 100 est en un matériau léger, souple et apte à supporter des températures de l'ordre de 40°C à 45°C. Ce matériau est de préférence une matière naturelle telle que du coton ou le cas échéant du lin ou de la laine, notamment de la laine peignée. Le sac peut également être réalisé à partir d'un tissu mixte de fibres naturelles comprenant par exemple un mélange de coton et de lin ou de coton et de laine.

Le sac 100 peut présenter des dimensions variées selon les besoins, mais peut avantageusement présenter une hauteur L2 de l'ordre de 700 mm et une largeur L1 de l'ordre de 260 mm, ce qui le rend adapté pour des pains longs tels que des baguettes parisiennes ou des flûtes.

Le sac à pain chauffant 100 comprend au moins une et, de préférence, deux plaques électriques chauffantes semi-flexibles 121, 122 qui sont disposées en sandwich à l'intérieur des faces avant et arrière des parois latérales 114 du sac.

Les parois latérales du sac 100 destinées à incorporer les plaques chauffantes 121, 122 sont ainsi réalisées sous la forme de housses ou de poches souples en coton à l'intérieur desquelles sont emprisonnées les plaques chauffantes semi-flexibles 121, 122.

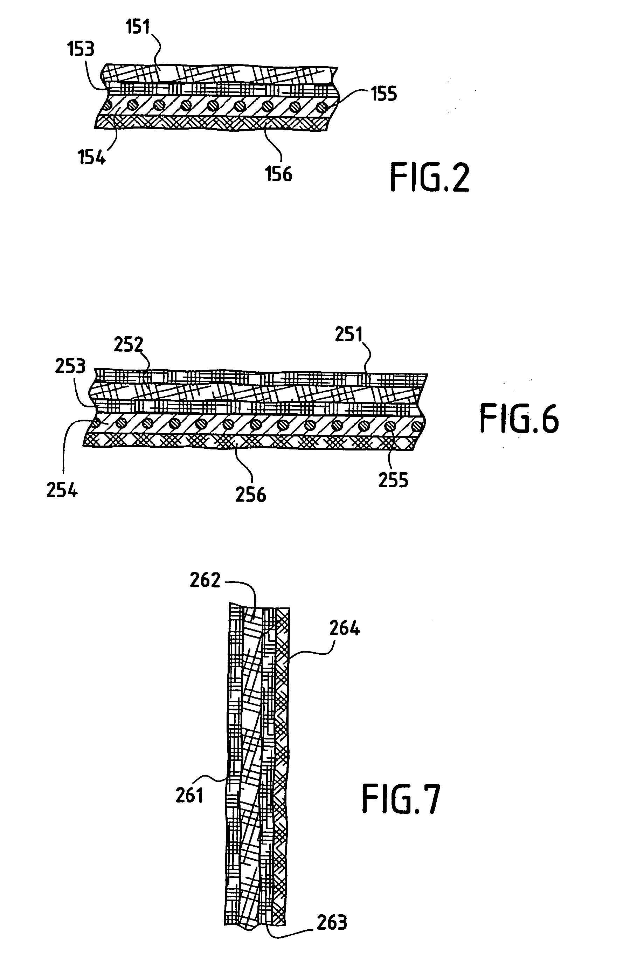

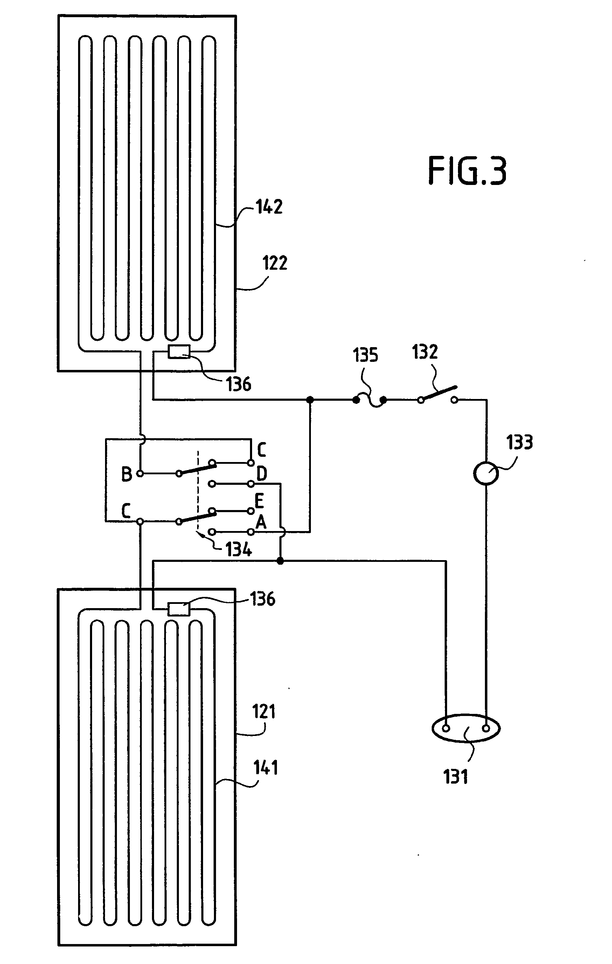

Chaque plaque chauffante semi-flexible 121, 122 comprend une résistance électrique à fil 155 comprenant des spires 141, 142 réparties en nappe et insérées dans des feuilles en un matériau tel que par exemple du tissu de verre siliconé 154 (figures 2 et 3).

Chaque plaque chauffante rectangulaire 121, 122 présente des dimensions D1, D2 légèrement inférieures à la largeur L1 et la hauteur L2 des faces frontales du sac 100.

Avec l'exemple de dimensions L1 et L2 donné plus haut, une plaque chauffante 121, 122 peut présenter par exemple une largeur D1 = 177 mm et une longueur D2 = 620 mm.

La nature du fil électrique 155, sa section, la longueur totale des spires 141, 142 et leur répartition, ainsi que la tension d'alimentation, sont choisies de manière à délivrer une puissance de chauffage par cm² comprise entre 0,13 W et 0,24 W et de préférence comprise entre 0,16 et 0,20 W, une valeur préférentielle étant de 0,18 W.

Grâce à un tel choix de valeurs, le chauffage des pains ou autres produits de boulangerie placés dans le sac 100 peut s'effectuer rapidement en quelques minutes, de l'ordre de 2 ou 3 mn, selon la température ambiante, et permet d'atteindre une température optimale de réchauffage des produits, de l'ordre de 36°C à 44°C, avec une valeur moyenne de l'ordre de 40°C, qui est telle que le pain réchauffé garde toute sa saveur et n'est ni trop dur, ni trop sec et ne devient pas rassis même lorsqu'il revient à la température ambiante. Le choix de densités de puissance particulières pour les plaques chauffantes 121, 122 garantit que les particules d'eau présentes dans le pain ne sont pas complètement éliminées, contrairement au cas du pain grillé ou du pain placé dans un four à micro-ondes.

Chaque housse souple en coton destinée à incorporer une plaque chauffante 121, 122 comprend de préférence d'une part une garniture de coton extérieure 151 associée à une finette de coton 153 disposée entre la garniture de coton extérieure 151 et la plaque chauffante 121, 122 et d'autre part une doublure de coton intérieure 156 disposée du côté intérieur par rapport à la plaque chauffante 121, 122 (figure 2). Ces matières naturelles permettent à la fois de réaliser un sac léger et capable de bien résister à la chaleur tout en concentrant la chaleur à l'intérieur du sac, la finette de coton 153 ou un molleton équivalent assurant notamment une isolation thermique par rapport à l'extérieur.

Du fait que les plaques 121, 122 sont disposées parallèlement l'une à l'autre dans deux faces opposées des parois latérales 110 du sac 100, les pains disposés dans le sac peuvent être rapidement mis en température. La mise en température est plus rapide si le sac est posé à plat sur l'une des faces contenant une des plaques 121, 122, mais un réchauffage intervient également dans des conditions satisfaisantes si le sac est maintenu verticalement en étant par exemple suspendu par son cordon 116.

Le sac 100 peut comprendre des soufflets 110C entre les deux faces latérales principales 110A, 110B de manière à permettre une adaptation à différentes quantités de pain tout en garantissant, lorsque le sac est posé à plat, la plus grande proximité possible entre le pain et les parois équipées des plaques chauffantes 121, 122, du fait de la capacité de déformation des soufflets 110C dans une direction perpendiculaire aux faces principales 110A, 110B du sac 100.

La tension d'alimentation des résistances électriques 141, 142 des plaques chauffantes 121, 122 est de préférence comprise entre environ 100 V et 240 V. Les fils conducteurs 155 peuvent être par exemple en nickel-chrome.

La figure 3 montre un exemple de schéma électrique d'alimentation des résistances électriques 141, 142 des plaques 121, 122.

Une prise 131, par exemple du type 1+1, permet le raccordement à un cordon d'alimentation destiné à être branché sur une prise d'un réseau d'alimentation pouvant présenter une première tension nominale V_{N1} par exemple de l'ordre de 230 V ou 220 V, ou une deuxième tension nominale V_{N2}, par exemple de l'ordre de 115 V ou 110 V, qui est la moitié de la première tension nominale V_{N1}.

Un interrupteur 132, qui peut être associé à un voyant lumineux 133 incorporé ou non dans l'interrupteur 132, permet la mise en service du dispositif de chauffage. Un fusible 135 assure la sécurité du circuit.

Un commutateur bi-tension 134 possédant des bornes A à E est branché de telle sorte que, dans une première position du commutateur 134 (représentée sur la figure 3), il assure l'alimentation en série des résistances 141 et 142 à partir de la prise 131, lorsque celle-ci est alimentée à partir de la première tension nominale V_{N1}, par exemple de 220 V, et dans une deuxième position du commutateur 134, celui-ci assure l'alimentation en parallèle des résistances 141 et 142 à partir de la prise 131, lorsque celle-ci est alimentée à partir de la deuxième tension nominale V_{N2}, par exemple de 110 V. Le sac chauffant 100 peut ainsi être utilisé avec les mêmes conditions de chauffage aussi bien dans des pays ayant un réseau d'alimentation avec une tension de l'ordre de 100 à 130 V que dans des pays ayant un réseau d'alimentation avec une tension de l'ordre de 200 à 260 V, sans qu'il soit nécessaire d'assurer une fabrication spécifique ou d'utiliser un transformateur. Le même type de montage peut s'appliquer au cas d'une seule plaque chauffante ayant un point milieu de connexion permettant le montage en série ou en parallèle de deux moitiés de résistance.

Naturellement, il est aussi possible de réaliser un circuit électrique adapté à un seul type de tension d'alimentation nominale, avec un montage des résistances électriques réalisé de façon fixe soit en série, soit en parallèle, sans le commutateur 134.

Des limiteurs thermiques 136, ajustés pour éviter un échauffement au-delà d'une température prédéterminée, par exemple 44°C ou 45°C, peuvent être intégrés à chaque plaque chauffante 121, 122.

Dans le sac allongé 100, on peut disposer l'interrupteur 132 et son voyant 133 à la partie supérieure, tandis que la prise 131, le commutateur 134 et le fusible 135 sont disposés dans la partie basse du sac, mais cette disposition n'est pas obligatoire et d'autres agencements sont possibles.

On décrira maintenant en référence aux figures 4 à 7 un autre mode de réalisation de sac chauffant 200 conforme à l'invention qui présente une forme de mallette.

Dans le cas du sac chauffant 200, la paroi de fond 211, les parois latérales 220 et la paroi supérieure 213 formant couvercle et destinée à se rabattre sur l'ouverture 212 peuvent présenter une rigidité un peu plus grande que les parois du sac allongé 100 de la figure 1, tout en gardant une certaine souplesse. Une mallette 200 présentant les mêmes caractères de souplesse que le sac allongé 100 peut toutefois aussi être réalisée à titre de variante. La mallette 200 peut comporter comme dans le cas du sac 100 des parois en coton qui présentent pour les parois latérales 210 une garniture extérieure 261 en coton associée à une finette de coton 263 et à une doublure intérieure en coton 264. Une couche de matériau semi-rigide telle qu'un produit thermocollant à embrase 262 est de préférence intercalée par exemple entre la garniture extérieure 261 et la finette de coton 263 pour renforcer la paroi latérale 210 et éviter qu'elle s'affaisse trop fortement (figure 7).

De la même manière, la paroi de fond 212 et le couvercle 213, qui sont réalisés sous la forme de housses en coton comme les parois 110 du sac 100 pour incorporer des plaques de chauffage semi-rigides 121, 122, peuvent être renforcés comme représenté sur la figure 6.

Ainsi, une garniture de coton extérieure 251, une couche de renfort 252 telle qu'un produit thermocollant à embrase et une finette de coton 253 forment une paroi extérieure de housse en coton en contact avec une plaque chauffante constituée par exemple de feuilles de tissu de verre siliconé 254 intégrant un fil 255 en nappe constituant une résistance électrique, tandis que la paroi intérieure de la housse en coton est constituée par une doublure en coton 256 (figure 6).

Dans le cas de la mallette 200, le circuit électrique des plaques chauffantes 121, 122 peut être analogue à celui décrit en référence au mode de réalisation de la figure 1, seules les dimensions étant différentes, mais la plage de puissance de chauffage par cm² restant identique à ce qui a été indiqué plus haut.

Le cas échéant, dans le cas de la mallette 200 comme pour le sac 100, les plaques chauffantes 121, 122 avec leurs fils d'alimentation protégés dans une gaine peuvent être montées de façon amovible dans leur housse de façon à pouvoir être retirées temporairement avec les éléments associés (prise 131, interrupteur 132, voyant 133, commutateur 134, fusible 135) et permettre un nettoyage plus aisé du sac. Dans ce cas, chaque housse comprend une ouverture qui peut être fermée de façon sélective, par exemple à l'aide d'une fermeture à glissière, pour permettre le retrait et la remise en place de la plaque chauffante et de ses fils d'alimentation.

La mallette 200 peut comporter un cordon 216, une poignée 217 pour le couvercle 213, un rabat souple supplémentaire 213A venant se fermer par exemple par des bandes de tissu 214, 215 s'accrochant par leurs fibres textiles, et le cas échéant une fermeture à glissière 218 ou d'autres moyens d'obturation pour maintenir le couvercle 213 en position fermée sur le rebord de l'ouverture 212.

A titre d'exemple, la mallette 200, particulièrement adaptée pour des produits de petite taille ou des produits en forme de boule, de galette ou de couronne, peut présenter une profondeur L10 de 260 mm, une largeur L20 de 350 mm et une hauteur L30 de 200 à 260 mm.

Pour une mallette présentant de telles dimensions, les plaques chauffantes 121, 122 peuvent présenter par exemple une largeur D20 de 330 mm et une profondeur D10 de 177 mm.

Naturellement, diverses variantes de réalisation sont possibles. Ainsi, la mallette 200 des figures 4 et 5 comprend des plaques chauffantes semi-rigides 121, 122 disposées parallèlement dans le fond 211 et le couvercle 213 de la mallette, la prise 131, l'interrupteur 132 et son voyant 133, le commutateur 134 et le fusible 135 étant disposés sur une paroi latérale de la mallette. Il est toutefois possible de disposer également une ou plusieurs plaques chauffantes analogues aux plaques 121, 122, en plus des plaques 121, 122 ou en lieu et place de celles-ci, dans une ou plusieurs des parois latérales 210 de la mallette 200, dans la mesure où celles-ci seraient également réalisées sous la forme de housses ou poches dans une matière naturelle souple telle que du coton, par exemple avec la composition illustrée sur la figure 6. Les produits de boulangerie seraient alors réchauffés par les parois latérales comme dans le cas du sac souple 100, plutôt que par le fond et le couvercle.

Toutefois, dans le cas de plaques chauffantes 121, 122 disposées dans le fond 211 et le couvercle 213, et de parois latérales 210 réalisées de façon suffisamment souples, il est possible de garantir un bon contact des parois chauffantes 211, 213 avec les produits à réchauffer, quel que soit le degré de remplissage du sac, dès lors que le couvercle 213 vient toujours reposer sur les produits, même si ceux-ci ne viennent par exemple qu'à mi-hauteur à l'intérieur de la mallette 200, du fait de la capacité de déformation des parois latérales 210 dans une direction perpendiculaire aux faces principales constituées par le fond 211 et le couvercle 213, qui permet au couvercle de s'affaisser sous son propre poids jusqu'au niveau des produits à réchauffer.

## Revendications

1. Sac chauffant pour produits de boulangerie fabriqués à l'aide d'une pâte à base de farine, le sac comprenant une enveloppe souple ou semi-rigide définissant un fond (111 ; 211), des parois latérales (110 ; 210), une ouverture (112 ; 212) et des moyens (113 ; 213) d'obturation sélective de l'ouverture (112 ; 212),
**caractérisé en ce qu'**il comprend au moins une plaque chauffante semi-flexible (121, 122) dans laquelle est incorporée une résistance électrique (141, 142) et qui est elle-même insérée dans une housse en un matériau naturel comprenant le coton, le lin et la laine, cette housse constituant une partie du fond (111 ; 211), des parois latérales (110 ; 210) ou des moyens d'obturation (113 ; 213) du sac, et **en ce que** pour chaque plaque chauffante (121, 122) la puissance de chauffage par cm² est comprise entre 0,13 W et 0,24 W.

2. Sac chauffant selon la revendication 1, **caractérisé en ce que** la puissance de chauffage par cm² pour chaque plaque chauffante (121, 122) est comprise entre 0,16 W et 0,20 W.

3. Sac chauffant selon la revendication 1 ou la revendication 2, **caractérisé en ce qu'**il comprend des première et deuxième plaques chauffantes semi-flexibles (121, 122) dans chacune desquelles est incorporée une résistance électrique (141, 142) et qui sont elles-mêmes insérées dans des housses en un matériau naturel constituant une partie du fond (111 ; 211), des parois latérales (110 ; 210) ou des moyens d'obturation (113 ; 213) du sac.

4. Sac chauffant selon l'une quelconque des revendications 1 à 3, **caractérisé en ce que** la tension d'alimentation de la résistance électrique (141, 142) de chaque plaque chauffante (121, 122) est comprise entre 100 V et 240 V.

5. Sac chauffant selon la revendication 3, **caractérisé en ce que** les première et deuxième plaques chauffantes (121, 122) sont incorporées dans deux parties opposées des parois latérales (110 , 210).

6. Sac chauffant selon la revendication 3, **caractérisé en ce que** les première et deuxième plaques chauffantes (121, 122) sont incorporées d'une part dans le fond (211) du sac et d'autre part dans les moyens (213) d'obturation sélective de l'ouverture (212).

7. Sac chauffant selon l'une quelconque des revendications 1 à 6, **caractérisé en ce que** chaque plaque chauffante semi-flexible (121, 122) comprend une résistance électrique à fil (155 ; 255) intégré en nappe insérée dans des feuilles de tissu de verre siliconé (154 ; 254).

8. Sac chauffant selon l'une quelconque des revendications 1 à 7, **caractérisé en ce que** chaque housse incorporant une plaque chauffante semi-flexible (121, 122) comprend d'une part une garniture de coton extérieure (151 ; 251) et une finette de coton (153 ; 253) disposée entre la garniture de coton extérieure (151 ; 251) et ladite plaque chauffante (121, 122) et d'autre part une doublure de coton intérieure (156 ; 256) disposée du côté intérieur par rapport à ladite plaque chauffante (121, 122).

9. Sac chauffant selon l'une quelconque des revendications 1 à 5 et 7, 8, **caractérisé en ce qu'**il comprend une forme allongée et **en ce que** les moyens (113) d'obturation sélective de l'ouverture (112) sont constitués par un simple rabat souple (113A) ou par des moyens de fermeture disposés au voisinage du rebord de l'ouverture (112).

10. Sac chauffant selon l'une quelconque des revendications 1 à 8, **caractérisé en ce qu'**il présente la forme d'une mallette et comprend des parois semi-rigides renforcées par une couche (252, 262) de produit thermocollant à embrase.

11. Sac chauffant selon l'une quelconque des revendications 1 à 10, **caractérisé en ce qu'**il comprend un commutateur (134) pour assurer sélectivement le branchement des résistances électriques (141, 142) en série pour une alimentation à partir d'une source de tension d'alimentation à une première tension nominale V_{N1} ou en parallèle pour une alimentation à partir d'une source de tension d'alimentation à une seconde tension nominale V_{N2} égale à la moitié de la première tension nominale V_{N1}.

12. Sac chauffant selon l'une quelconque des revendications 1 à 11, **caractérisé en ce qu'**il comprend en outre un limiteur thermique (136) intégré à chaque plaque chauffante (121, 122).

13. Sac chauffant selon l'une quelconque des revendications 1 à 12, **caractérisé en ce qu'**il comprend une paire de plaques chauffantes semi-flexibles (121, 122) disposées dans deux faces principales opposées du sac (110A, 110B; 211, 213) et **en ce que** les parois (110C, 210) réunissant ces deux faces principales opposées (110A, 110B; 211, 213) présentent une capacité de déformation dans une direction perpendiculaire auxdites faces principales opposées.

14. Sac chauffant selon l'une quelconque des revendications 1 à 13, **caractérisé en ce que** chaque plaque chauffante semi-flexible (121, 122) est amovible par rapport à la housse dans laquelle elle est insérée.

## Claims

1. A heater bag for bakery products made using a flour-based dough, the bag comprising a flexible or semi-rigid casing defining a bottom (111; 211), side walls (110; 210), an opening (112; 212), and means (113; 213) for selectively closing the opening (112; 212), the bag being **characterized in that** it includes at least one semi-flexible heater plate (121, 122) having an electrical heater element (141, 142) incorporated therein and itself being inserted in a pocket of natural material comprising cotton, flax, and wool, said pocket constituting a portion of the bottom (111; 211), of the side walls (110; 210), or of the means (113; 213) for closing the bag, and **in that** for each heater plate (121, 122) the heating power per cm² lies in the range 0.13 W to 0.24 W.

2. A heater bag according to claim 1, **characterized in that** the heating power per cm² for each heater plate (121, 122) lies in the range 0.16 W to 0.20 W.

3. A heater bag according to claim 1 or claim 2, **characterized in that** it includes first and second semi-flexible heater plates (121, 122) each having a heater element (141, 142) incorporated therein and themselves being inserted in pockets of natural material constituting a portion of the bottom (111; 211), of the side walls (110; 210), or of the means (113; 213) for closing the bag.

4. A heater bag according to any one of claims 1 to 3, **characterized in that** the power supply voltage for the heater element (141, 142) of each heater plate (121, 122) lies in the range 100 V to 240 V.

5. A heater bag according to claim 3, **characterized in that** the first and second heater plates (121, 122) are incorporated in two opposite portions of the side walls (110, 210).

6. A heater bag according to claim 3, **characterized in that** the first and second heater plates (121, 122) are incorporated firstly in the bottom (211) of the bag and secondly in the means (213) for selectively closing the opening (212).

7. A heater bag according to any one of claims 1 to 6, **characterized in that** each semi-flexible heater plate (121, 122) comprises an electrical resistance wire (155; 255) integrated in a sheet that is inserted in sheets of silicone glass fabric (154; 254).

8. A heater bag according to any one of claims 1 to 7, **characterized in that** each pocket incorporating a semi-flexible heater plate (121, 122) comprises firstly an outer cotton lining (151; 251) and a flannelette (153; 253) disposed between the outer cotton lining (151; 251) and said heater plate (121, 122), and secondly an inner cotton lining (156; 256) placed on the inside relative to said heater plate (121, 122).

9. A heater bag according to any one of claims 1 to 5 and 7, 8, the bag being **characterized in that** it is elongate in shape and **in that** the means (113) for selectively closing the opening (112) are constituted by a simple flexible flap (113A) or by closure means disposed in the vicinity of the rim of the opening (112).

10. A heater bag according to any one of claims 1 to 8, **characterized in that** it is in the form of a case and includes semi-rigid walls reinforced by a layer (252, 262) of a heat-reactivatable substance used for tieback.

11. A heater bag according to any one of claims 1 to 10, **characterized in that** it includes a switch (134) for selectively connecting the heater elements (141, 142) in series for powering from a power supply at a first nominal voltage V_{N1}, or in parallel for powering from a power supply at a second nominal voltage V_{N2} equal to half the first nominal voltage V_{N1}.

12. A heater bag according to any one of claims 1 to 11, **characterized in that** it further comprises a temperature limiter (136) integrated in each heater plate (121, 122).

13. A heater bag according to any one of claims 1 to 12, **characterized in that** it includes a pair of semi-flexible heater plates (121, 122) disposed in two opposite main faces of the bag (110A, 110B; 211, 213), and **in that** the walls (110C, 210) uniting these opposite main faces (110A, 110B; 211, 213) present a capacity for deformation in a direction perpendicular to said opposite main faces.

14. A heater bag according to any one of claims 1 to 13, **characterized in that** each semi-flexible heater plate (121, 122) is removable relative to the pocket in which it is inserted.

## Patentansprüche

1. Heiztasche für Backwaren, die mit Hilfe eines Teigs auf Mehlbasis hergestellt sind, wobei die Tasche eine flexible oder halbstarre Hülle umfaßt, die einen Boden (111; 211), Seitenwände (110; 210), eine Öffnung (112; 212) sowie Mittel (113; 213) zum selektiven Verschließen der Öffnung (112; 212) definiert,
**dadurch gekennzeichnet, daß** sie wenigstens eine halbflexible Heizplatte (121, 122) umfaßt, in die ein elektrischer Widerstand (141, 142) eingebettet ist und die selbst in eine Schutzhülle aus einem Baumwolle, Leinen und Wolle umfassenden Naturmaterial eingesteckt ist, wobei diese Schutzhülle einen Teil des Bodens (111; 211), der Seitenwände (110; 210) oder der Verschlußmittel (113; 213) der Tasche bildet, und daß für jede Heizplatte (121, 122) die Heizleistung pro cm² zwischen 0,13 W und 0,24 W liegt.

2. Heiztasche nach Anspruch 1, **dadurch gekennzeichnet, daß** die Heizleistung pro cm² für jede Heizplatte (121, 122) 0,16 W bis 0,20 W beträgt.

3. Heiztasche nach Anspruch 1 oder Anspruch 2, **dadurch gekennzeichnet, daß** sie eine erste und eine zweite halbflexible Heizplatte (121, 122) umfaßt, in die jeweils ein elektrischer Widerstand (141, 142) eingebettet ist und die selbst in Schutzhüllen aus einem Naturmaterial, die einen Teil des Bodens (111; 211), der Seitenwände (110; 210) oder der Verschlußmittel (113, 213) der Tasche bilden, eingesteckt sind.

4. Heiztasche nach einem der Ansprüche 1 bis 3, **dadurch gekennzeichnet, daß** die Versorgungsspannung des elektrischen Widerstandes (141, 142) einer jeden Heizplatte (121, 122) zwischen 100 V und 240 V liegt.

5. Heiztasche nach Anspruch 3, **dadurch gekennzeichnet, daß** die erste und die zweite Heizplatte (121, 122) in zwei gegenüberliegende Teile der Seitenwände (110, 210) eingebettet sind.

6. Heiztasche nach Anspruch 3, **dadurch gekennzeichnet, daß** die erste und die zweite Heizplatte (121, 122) einerseits in den Boden (211) der Tasche und andererseits in die Mittel (213) zum selektiven Verschließen der Öffnung (212) eingebettet sind.

7. Heiztasche nach einem der Ansprüche 1 bis 6, **dadurch gekennzeichnet, daß** jede halbflexible Heizplatte (121, 122) einen elektrischen Widerstand mit flächig integriertem Draht (155; 255) umfassen, der in Folien aus silikonbeschichtetem Glasgewebe (154; 254) eingebettet ist.

8. Heiztasche nach einem der Ansprüche 1 bis 7, **dadurch gekennzeichnet, daß** jede eine halbflexible Heizplatte (121, 122) enthaltende Schutzhülle einerseits eine baumwollene Außenverkleidung (151; 251) und einen zwischen der baumwollenen Außenverkleidung (151; 251) und der Heizplatte (121, 122) angeordneten gerauhten Baumwollfutterstoff (153; 253) sowie andererseits ein Baumwollinnenfutter (156; 256), das bezogen auf die Heizplatte (121, 122) auf der Innenseite angeordnet ist, umfaßt.

9. Heiztasche nach einem der Ansprüche 1 bis 5 und 7, 8, **dadurch gekennzeichnet, daß** sie eine langgestreckte Form aufweist und daß die Mittel (113) zum selektiven Verschließen der Öffnung (112) von einer einfachen flexiblen Klappe (113) oder von Verschlußmitteln, die in der Nähe des Randes der Öffnung (112) angeordnet sind, gebildet sind.

10. Heiztasche nach einem der Ansprüche 1 bis 8, **dadurch gekennzeichnet, daß** sie die Form eines Handkoffers aufweist und halbstarre Wände aufweist, die durch eine Schicht (252, 262) aus heißklebendem Produkt für Gardinenhalter verstärkt sind.

11. Heiztasche nach einem der Ansprüche 1 bis 10, **dadurch gekennzeichnet, daß** sie einen Schalter (134) umfaßt, um selektiv das Inreiheschalten der elektrischen Widerstände (141, 142) für eine Versorgung mittels einer Versorgungsspannungsquelle mit einer ersten Nennspannung V_{N1} oder das Parallelschalten für eine Versorgung mittels einer Versorgungsspannungsquelle mit einer zweiten Nennspannung V_{N2}, die gleich der Hälfte der ersten Nennspannung V_{N1} ist, sicherzustellen.

12. Heiztasche nach einem der Ansprüche 1 bis 11, **dadurch gekennzeichnet, daß** sie ferner einen in jede Heizplatte (121, 122) integrierten Wärmebegrenzer (136) umfaßt.

13. Heiztasche nach einem der Ansprüche 1 bis 12, **dadurch gekennzeichnet, daß** sie ein Paar von halbflexiblen Heizplatten (121, 122) umfaßt, die in zwei gegenüberliegenden Hauptseiten (110A, 110B; 211, 213) der Tasche angeordnet sind, und daß die Wände (110C, 210), die diese beiden gegenüberliegenden Hauptseiten (110A, 110B; 211, 213) verbinden, in der Lage sind, sich in einer zu den gegenüberliegenden Hauptseiten senkrechten Richtung zu verformen.

14. Heiztasche nach einem der Ansprüche 1 bis 13, **dadurch gekennzeichnet, daß** jede halbflexible Heizplatte (121, 122) gegenüber der Schutzhülle, in die sie eingesteckt ist, herausnehmbar ist.
